# EUROPÄISCHE PATENTANMELDUNG

(11) **EP 0 560 247 A1**
(43) Veröffentlichungstag der Anmeldung: **15.09.1993**
(21) Anmeldenummer: 93103665.1
(22) Anmeldetag: 08.03.1993
(51) Int. Cl.: F16K 35/02

(54) **Kugelhahn**

(30) Priorität: 10.03.1992 DE 4207549
(71) Anmelder: MÜTZLER GmbH + Co. KG, D-58256 Ennepetal (DE)
(72) Erfinder: Mützler, Hans-Joachim, sen., W-5828 Ennepetal (DE); Mützler, Hans Joachim, jun., W-5828 Ennepetal (DE)
(74) Vertreter: Schulze Horn, Stefan, Dipl.-Ing. M.Sc.

(57) **Zusammenfassung**

Die Erfindung betrifft einen Kugelhahn, insbesondere zur Verwendung als Hochdruck-Kugelhahn für Druckluftleitungen im Bergbau, mit einem Gehäuse (1) mit einem Strömungskanal, der durch eine um eine Kugelachse drehbare Ventilkugel (2) absperrbar ist, einer Hahnspindel (4), die drehfest mit der Ventilkugel (2) verbunden ist, einem Griffteil (8), das drehfest und längsverschieblich auf dem äußeren Ende der Hahnspindel (4) sitzt, einer Kulisse (9), die am Griffteil (8) ausgebildet ist, einem in diese eingreifenden Stift (10) und einer wendelförmigen Feder (6), die die Hahnspindel (4) umgibt.

Erfindungsgemäß weist das Griffteil (8) einen zur Hahnspindel (4) achsparallelen, im wesentlichen zylindrischen Ansatz (7) auf, drückt die Feder (6) das Griffteil (8) von der Ventilkugel (2) weg, ist die Kulisse (9) in der Umfangsfläche des Ansatzes (7) ausgebildet und erstreckt sich der Stift (10) im wesentlichen radial zum Ansatz (7) durch die die Spindelbohrung (3) umgebende Wand des Gehäuses (1).

## Beschreibung

Die Erfindung betrifft einen Kugelhahn gemäß dem Oberbegriff des Anspruchs 1.

Ein solcher Kugelhahn ist aus der DE-PS 33 20 118 bekannt und weist ein Griffteil auf, das mit seiner Nabe auf dem äußersten Ende einer Spindelwelle sitzt, die mit der Ventilkugel des bekannten Kugelventils verbunden ist.

Zwischen der Spindelwelle und dem hiermit drehfest, aber axial verschieblich verbundenen Griffstück sitzt beim bekannten Kugelhahn eine wendelförmige Feder, die die Spindelwelle umgibt, welche drehfest mit der Ventilkugel verbunden ist und eine Spindelbohrung im Gehäuse des Kugelhahns durchsetzt. An der dem Gehäuse des Kugelhahnes zugewandten Ende des Griffstücks ist eine Kulisse ausgebildet, welche zusammen mit dem Griffstück gegen einen am Gehäuse befestigten, zur Spindelachse parallelen Stift angedrückt wird.

Die Kulisse ist so ausgebildet, daß sie die Drehung des Griffstücks auf etwa 90° begrenzt, entsprechend dem Drehbereich der Ventilkugel. Ferner weist die Kulisse eine Rast- oder Sperrvertiefung an jenem Ende der Kulisse auf, welches der Schließstellung der Ventilkugel entspricht, um den Kugelhahn gegen unbeabsichtigtes Öffnen zu sichern. Erst dann, wenn man in der Schließstellung des Griffstücks an dessen Griff in einer Richtung von der Ventilkugel weg und gegen die Kraft der Feder anzieht, kann die Sperrvertiefung der Kulisse vom gehäusefesten Stift abgehoben werden und der Griff nachfolgend gedreht werden.

Die Kulisse erstreckt sich, von der sich axial erstrekkenden Sperrvertiefung abgesehen, in Umfangrichtung des Griffstückes bzw. der Hahnspindel. Es ist aber auch möglich und ggf. von Vorteil, daß die Kulisse abschnittsweise von der Umfangsrichtung abweicht, etwa um eine bestimmte Öffnungswinkellage des Griffstücks zu bevorzugen.

Der bekannte Kugelhahn ist bevorzugt zum Einsatz in den Druckluftleitungen in Bergwerken unter Tage vorgesehen, wo es einer hochgradigen Einwirkung von Staub und sonstiger Verschmutzung ausgesetzt ist; dieser Staub und Schmutz kann an die Kulisse gelangen und nicht nur zu deren vorzeitiger Abnutzung führen, sondern auch dazu, daß diese Kulisse völlig verstopft, so daß der Griff nicht mehr über seinen vollen Drehweg bewegt und/oder nicht mehr arretiert werden kann.

Falls der besonders zu Verschleiß neigende Stift ausgewechselt werden soll, müssen das Griffstück, seine abgedichtete Haltemutter und die Feder ausgebaut werden, um an den Stift zu gelangen. Dessen Auswechseln ist allerdings dadurch ganz erheblich erschwert, daß er als ein in eine Sackbohrung eingeschlagener, offensichtlich unrunder Bolzen ausgebildet ist.

Wenn der bekannte Kugelhahn etwa am Boden aufrecht montiert ist, dann muß zum Lösen der Arretierung der Griff gegen die Kraft der Feder angehoben werden, was bei einer strammen Feder recht mühsam sein kann.

Außerdem macht der an die Führungsfläche der Kulisse gelangende Schmutz und Staub die Drehung des Griffes recht schwergängig, auch wenn dieser Bereich gut gefettet wird, weil das Fett großflächig freiliegt und somit rasch verschmutzen kann.

Ausgehend von diesem Stand der Technik liegt der Erfindung die Aufgabe zugrunde, die eingangs genannten Unzulänglichkeiten mindestens zum Teil auszuräumen und insbesondere den eingangs genannten, bekannten Kugelhahn dahingehend weiterzubilden, daß er bei vereinfachtem Aufbau erheblich unempfindlicher gegenüber Verschmutzung ist als der bekannte Kugelhahn.

Diese Aufgabe wird durch die Merkmale des Anspruchs 1 gelöst.

Hierbei sitzt erfindungsgemäß die Kulisse und das in sie eingreifende freie Ende des Stiftes im Inneren der Spindelbohrung und damit im Inneren des Gehäuses; es ist lediglich erforderlich, den Ringspalt zwischen der Innenwand der Spindelbohrung und der Außenwand des kreiszylindrischen Ansatzes des Griffstücks ausreichend abzudichten, etwa durch eine Gleitpassung, eine Fettschicht o. dgl., um das Eindringen von Schmutz und Staub in den Bereich der Kulisse so gut wie auszuschließen. Somit wird der erfindungsgemäße Kugelhahn nicht durch Schmutz- und Staubeinwirkung im Betrieb unbrauchbar, sondern bleibt immer leichtgängig bedienbar. Es ist sogar möglich, falls zweckmäßig, die Fettschmierung bei aufrecht montiertem Kugelhahn durch eine Ölsumpfschmierung zu ersetzen.

Außerdem ist es zum Lösen der Arretierung notwendig, den Griff und somit das Griffstück in Richtung zur Ventilkugel zu drücken, also bei aufrecht montiertem Kugelhahn nach unten. Die Kraft der Feder wird damit durch das Eigengewicht des Bedienungsmannes überwunden.

Wegen der Leichtgängigkeit kann der Griff selbst kleiner und glatter ausgebildet werden, als dies bei dem bekannten Kugelhahn möglich ist, so daß die Gefahr der unbeabsichtigten Betätigung des Hahnes etwa durch herabfallende Steine höchst gering ist.

Es ist zwar bereits bekannt (FR-PS 905 035), einen Radialstift im Hahngehäuse anzuordnen, der in eine Kulisse an einer ansatzartigen Verlängerung des Griffteiles eines Haushalts-Gashahnes eingreift, aber diese bekannte Kulissenanordnung liegt frei und ist der Verschmutzung mindestens ebenso ausgesetzt wie die des eingangs genannten, gattungsbildenden Kugelhahnes. Außerdem muß bei beiden bekannten Anordnungen der Griff zum Lösen der Arretierung vom Ventilgehäuse weggezogen werden, im Gegensatz zur Erfindung, bei der er eingedrückt werden muß.

Die Verschmutzung der völlig glatten Außenumfangsfläche des Ansatzes, soweit dieser aus dem Gehäuse bzw. der Spindelbohrung herausragt, ist allenfalls gering und behindert das Eindrücken des Ansatzes zusammen mit dem Griffstück in keiner Weise.

Da das freie Ende des Stiftes die Kulisse hintergreift, verhindert der Stift das Freikommen des Griffstückes durch Einwirkung der Feder. Zum Zerlegen muß lediglich der Stift entfernt werden. Gewindeteile, die bei dem bekannten Kugelhahn den Griff in seiner Lage halten und die gegen die Kraft der Feder montiert werden müssen, sind nicht erforderlich.

Gemäß einer bevorzugten Ausgestaltung der Erfindung ist die Kulisse als eine sich im wesentlichen in Umfangsrichtung erstreckende Nut ausgebildet, deren Breite jene des in sie eingreifenden freien Endes des Stiftes nur soweit übersteigt, wie dies zur unbehinderten Drehung des Griffteils zweckmäßig ist. Es wird somit jegliche Axialbewegung des Griffstückes und somit auch des Ansatzes verhindert, ausgenommen in Schließstellung des Kugelhahnes, wenn diese Nut in Achsrichtung abgewinkelt ist. Das versehentliche und unnötige Eindrücken des Griffstücks in Öffnugnsstellung des Kugelhahnes, das Staub in das Innere des Gehäuses hineinfördern könnte, wird somit verhindert. Außerdem zeigt die axiale Unbeweglichkeit des Griffes dem Bedienungsmann an, daß das Ventil mindestens teilweise offen ist, also nicht geschlossen sein kann.

Der Stift kann als feste Ausbildung eines Gehäuseteils vorgesehen sein, dessen Ein- und Ausbau den Ein- und Ausbau des Griffteils ermöglicht.

Gemäß einer bevorzugten Ausgestaltung der Erfindung ist jedoch im Gehäuse eine sich quer und bevorzugt radial zur Achse des Ansatzes erstreckende Durchgangsbohrung ausgebildet, die ein Innengewinde aufweist, in welches der mit einem Außengewinde versehene Gewindestift eingeschraubt ist. Diese Ausbildung ermöglicht nicht nur den mühelosen Ein- und Ausbau des Stiftes, sondern gestattet auch die genaue Regulierung seiner Länge, so daß er mit seinem freien Ende so weit wie möglich in die Kulisse eingreift, ohne aber gegen deren radial innenliegenden Grund hemmend anzulaufen.

Der Stift kann als Schraube mit einem außerhalb der Gewindebohrung sitzenden Außen- oder Innensechskantkopf ausgebildet sein. Um eine glatte Außenfläche des Gehäuses zu ermöglichen und gleichzeitig eine Verschmutzung der Gewindegänge des Gewindestiftes zu vermeiden, ist dieser jedoch bevorzugt als Madenschraube ausgebildet, die ganz in der Gewindebohrung sitzt. Der außerhalb der Madenschraube verbleibende Abschnitt der Gewindebohrung kann durch einen Stopfen verschlossen werden, um das Eindringen von Schmutz und Staub zu verhindern, das sonst das Ausschrauben oder Lockern der Madenschraube behindern könnte.

Der Stift muß nur um jene Strecke zurückbewegt werden, mit welcher er in die Kulisse eingreift, wenn das Griffteil ausgebaut werden soll; ein vollständiger Ausbau des Stiftes ist nicht erforderlich und auch nicht zweckmäßig, da der Stift dann höchstens verlorengehen kann.

Gemäß einer weiteren Ausgestaltung der Erfindung ist der Stift in seiner Lage sicherbar, also im Falle einer Madenschraube etwa durch eine zweite, auf diese aufgeschraubte Schraube, um jegliche Änderung der eingestellten optimalen Lage des Stiftes bzw. der Madenschraube auch nach längerem Betrieb wirksam zu verhindern.

Die Feder kann mit ihrem inneren Ende auf einem Absatz der Spindelbohrung aufsitzen; um eine besonders einfache Bauausführung zu erreichen, ist sie jedoch bevorzugt auf der Dichtungsbüchse abgestützt, die die Hahnspindel dichtend durchsetzt. Hierbei ist zusätzlich die Dichtungsbüchse daran gehindert, vom Innendruck im Inneren des Strömungskanales nach außen gedrückt zu werden.

Der bereits oben erwähnte Ringspalt zwischen der Innenoberfläche der Spindelbohrung und der Außenoberfläche des Ansatzes kann grundsätzlich recht groß sein, wenn die Führung von Hahnspindel und Griffstück anderweitig sichergestellt ist. Ein das Gehäuse rund um die Spindelbohrung umgebender, am Ansatz des Griffteiles befestigter, flexibler Faltenbalg kann dabei für eine vollständige Abdichtung auch eines großen Ringspaltes sorgen.

Gemäß einer bevorzugten Ausgestaltung der Erfindung ist jedoch der Ringspalt so eng wie sinnvoll möglich ausgebildet, so daß die Spindelbohrung ihrerseits geeignet ist, den Ansatz und damit das Griffstück bei seiner Dreh- und Axialbewegung zu führen und zu lagern; die drehfeste, axial verschiebliche Kraftübertragung zwischen dem Griffteil und der Hahnspindel (oder zwischen dieser und der Ventilkugel), die bei hoher Fertigungsgenauigkeit sehr aufwendig ist, kann mit hoher Toleranz und somit kostengünstig ausgeführt werden, da sie nicht auch noch führen muß.

Im Falle des kleinen Ringspaltes ist gemäß einer weiteren Ausgestaltung der Erfindung mindestens eine O-Ring-Dichtung besonders von Vorteil, die den Ringspalt nahe dem freien Ende der Spindelbohrung dichtend überbrückt und die die Drehung sowie Axialbewegung des Ansatzes frei zuläßt. Der O-Ring sitzt in einer Ringnut, die entweder in der Innenfläche der Spindelbohrung oder der Außenfläche des Ansatzes ausgebildet ist.

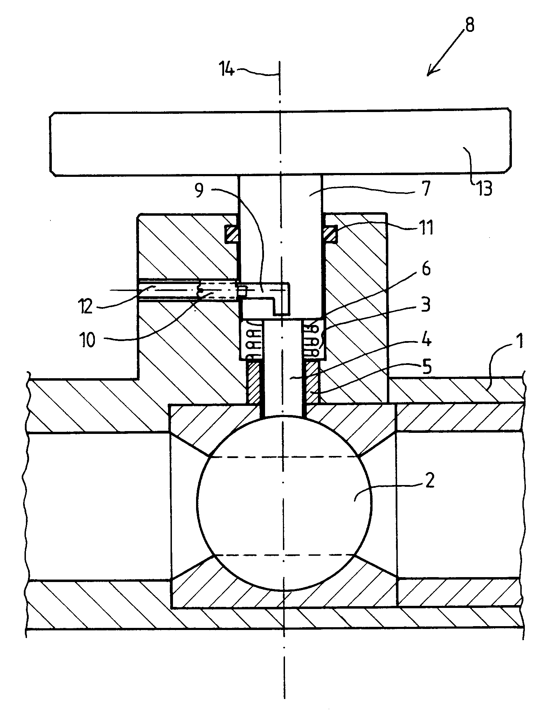

Der Gegenstand der Erfindung wird anhand der beigefügten, schematischen Zeichnung beispielsweise noch näher erläutert, in deren einziger Figur ein Ausschnitt des stark vereinfachten Längsschnitts durch ein Ausführungsbeispiel eines erfindungsgemäßen Kugelhahnes gezeigt ist.

In einem Gehäuse 1, durch das ein hier nicht gezeigter Strömungsweg für ein Hochdruck-Strömungsmittel hindurchführt, ist eine Ventilkugel 2 um eine Achse 14 drehbar angeordnet, welche ihrerseits einen gestrichelt gezeigten Durchlaß aufweist, welcher auf den Strömungsweg ausrichtbar ist. Wird die Ventilkugel 2 dann um 90° gedreht, dann stellt sich deren Durchlaß quer zum Strömungsweg und die Wandung der Ventilkugel 2 sperrt den Strömungsweg ab.

Das Gehause 1 weist eine sich längs der Achse 14 erstreckende Spindelbohrung 3 auf, welche von der die Ventilkugel 2 aufnehmenden Kammer ausgeht und nach außen mündet. Die Spindelbohrung 3 ist eine insgesamt zylindrische Bohrung, deren letzter, der Ventilkugel 2 nächstgelegener Abschnitt verengt ist. In diesen verengten Abschnitt ist eine Dichtungsbuchse 5 eingeschraubt oder eingepreßt, welche mittig von einer insgesamt zylindrischen Hahnspindel 4 dichtend durchsetzt ist, welche drehfest mit der Ventilkugel 2 verbunden ist. Die Form der Ventilkugel und deren Sitzes im Gehäuse entsprechen dem bekannten Stand der Technik.

Auf dem äußeren Ende der Hahnspindel sitzt auf dieser unverdrehbar, aber axial verschieblich ein zylindrischer Ansatz 7, der mit enger Spielpassung in der Spindelbohrung sitzt und mit Abstand zu der Dichtungsbuchse 5 endet. Der Ansatz 7 erstreckt sich aus der Spindelbohrung 3 nach außen, ist mit einem sich quer hierzu erstreckenden Handgriff 13 verbunden und bildet zusammen mit diesem ein Griffteil 8.

Zwischen der Dichtungsbuchse 5 und dem dieser zugewandten Ende des Ansatzes 7 sitzt zusammengedrückt eine die Hahnspindel 4 umgebende, wendelförmige Spiral-Druckfeder 6.

Nahe dem äußeren Ende der Spindelbohrung ist in deren Innenwand eine Ringnut eingebracht, in welcher ein O-Dichtungsring 11 sitzt, der dichtend und verschieblich mit der Außenoberfläche des Ansatzes in Eingriff steht und dessen Drehung sowie axiale Verschiebung zuläßt, aber das Eindringen von Fremdkörpern in einen Gehäuse-Innenraum im wesentlichen verhindert.

In die Außenoberfläche des Ansatzes 7 an einer Stelle zwischen dem O-Dichtungsring 11 und dem inneren Ende sowie nahe diesem ist eine Hut 9 eingebracht, welche sich über eine Strecke von 90° in Umfangsrichtung erstreckt und an einem Ende in einen kurzen, zur Achse 14 parallelen Abschnitt rechtwinklig übergeht, der sich zum benachbarten, inneren Ende des Ansatzes 7 hin erstreckt.

Bei dem gezeigten Ausführungsbelspiel liegt das eine Ende der eine Kulisse bildenden Nut 9, das nicht in den abgewinkelten Abschnitt übergeht, im wesentlichen über der Achse des die Ventilkugel 2 durchsetzenden, gestrichelt gezeichneten Durchlasses, während das den abgewinkelten Abschnitt aufweisende Ende der Hut 9 gegenüber dem anderen Ende um etwa 90° versetzt ist und dem Betrachter zugewandt ist.

Das Gehäuse 1 umgibt die Spindelbohrung 3 mit einer im wesentlichen zylindrischen Wandung, welche von einer Durchgangs-Gewindebohrung 12 durchsetzt ist, die genau über der Achse des Durchlasses der Ventilkugel 2 in deren Öffnungsstellung sowie parallel zu dieser Achse und radial zur Achse 14 angeordnet ist und in die Spindelbohrung 3 an einer solchen Stelle einmündet, daß sie genau auf die Hut 9 trifft.

In dieser Durchgangs-Gewindebohrung 12 sitzt eine kürzer als diese bemessene Madenschraube 10, deren Ende als Kulissenstein ausgebildet ist, der in die Nut 9 paßt, in diese eingreift und diese und damit den Ansatz 7 und das gesamte Griffteil 8 gegen die dieses nach außen drückende Feder 6 hält.

Die Madenschraube 10 ist durch hier nicht gezeigte Mittel am Lockern gehindert. Das äußere Ende der Durchgangs-Gewindebohrung 12 ist durch einen nicht gezeigten Stopfen verschlossen.

Wird der Griff 13 aus der in der Zeichnung gezeigten Lage verdreht, dann führt die als Kulissenstein ausgebildete Spitze der Madenschraube 10 den Ansatz 7 und somit das Griffteil 8 auf eine solche Weise, daß die Drehung des Griffes 13 um 90° möglich ist; am Ende dieser Drehung drückt die Feder 6 den Ansatz 7 und damit das Griffteil 8 und den Griff 13 nach außen (in der Zeichnung nach oben). Nun kann der Griff 13 erst wieder verdreht werden, wenn er gegen die Wirkung der Feder 6 nach innen bzw. unten gedrückt wird. Auf diese Weise ist die Schließlage des gezeigten Kugelhahnes arretiert.

Alle bewegten Funktionsteile des Kugelhahnes, den Griff 13 und dessen Achse ausgenommen, befinden sich im Inneren des Gehäuses 1 und jenseits der O-Ring-Dichtung 11 und sind somit sicher vor dem Zutritt von Schmutz, Staub usw.. Diese Funktionsteile, insbesondere die Kulissenführung 9, 10 und die Verbindung zwischen der Hahnspindel 4 und dem Ansatz 7, können verhältnismäßig klein ausgebildet sein, weil sie nicht der Verschmutzung ausgesetzt sind, und können dauergeschmiert sein, da eine Verschmutzung des Schmiermittels nicht zu erwarten ist.

Zum Zerlegen ist es lediglich erforderlich, die Madenschraube 10 soweit zu lockern, bis ihre Spitze die Hut 9 freigibt. Auch diese Madenschraube und deren sie aufnehmende Gewindebohrung 12 sind ohne weiteres vor Verschmutzung schützbar, so daß der Kugelhahn vor dem Zerlegen keiner gründlichen Reinigung unterzogen werden muß.

## Patentansprüche

1. Kugelhahn, insbesondere Hochdruck-Kugelhahn für Druckluftleitungen vorzugsweise im Bergbau, mit den folgenden Merkmalen:
- ein Gehäuse mit einem Strömungskanal, der durch eine um eine Kugelachse drehbare Ventilkugel absperrbar ist,
- eine eine Spindelbohrung in der Wand des Gehäuses durchsetzende Hahnspindel, die drehfest mit der Ventilkugel verbunden ist,
- eine Dichtungsbüchse, die nahe der Ventilkugel in der Spindelbohrung sitzt und gegenüber der sie drehbar durchsetzenden Hahnspindel abdichtet,
- ein Griffteil, das drehfest und längsverschieblich auf dem äußeren Ende der Hahnspindel sitzt und einen von außen her betätigbaren Griff aufweist,
- ein mit seinem einen Ende am Gehäuse befestigter Stift,
- eine Kulisse, die am Griffteil ausgebildet ist, sich rund um dessen Drehachse erstreckt und dem freien Ende des Stiftes benachbart ist und
- eine wendelförmige Feder, die die Hahnspindel umgibt, mit dem einen Ende gegenüber dem Ventilgehäuse abgestützt ist und mit dem anderen Ende das Griffteil mit seiner Kulisse gegen das freie Ende des Stiftes drückt,
wobei die Kulisse durch ihre Erstreckung den Drehwinkel des Griffteils begrenzt und bevorzugt an einer der Schließstellung der Ventilkugel entsprechenden Stelle eine Rastvertiefung aufweist, um das Griffteil in dieser Lage zu arretieren,
gekennzeichnet durch die folgenden Merkmale:
- das Griffteil (8) weist einen zur Hahnspindel (4) achsparallelen, im wesentlichen zylindrischen Ansatz (7) auf, der sich in die Spindelbohrung (3) hineinerstreckt,
- das äußere Ende der Feder (6) ist auf dem inneren Ende des Ansatzes (7) abgestützt und drückt über diesen das Griffteil (8) von der Ventilkugel (2) weg,
- die Kulisse (9) ist in der Umfangsfläche des Ansatzes (7) ausgebildet und
- der Stift (10) erstreckt sich im wesentlichen radial zum Ansatz (7) durch die die Spindelbohrung (3) umgebende Wand des Gehäuses (1).

2. Kugelhahn nach Anspruch 1, dadurch gekennzeichnet, daß die Kulisse als Umfangsnut (9) in der Außenoberfläche des Ansatzes (7) ausgebildet ist.

3. Kugelhahn nach einem der Ansprüche 1 oder 2, dadurch gekennzeichnet, daß der Stift als Gewindestift, vorzugsweise als Madenschraube (10), ausgebildet ist und in einer mit einem Innengewinde versehenen Durchgangsbohrung (12) in der Wand des Gehäuses (1) sitzt.

4. Kugelhahn nach einem der Ansprüche 1 bis 3, dadurch gekennzeichnet. daß der Stift (10) in seiner Betriebslage sicherbar und aus dieser lösbar angeordnet ist.

5. Kugelhahn nach einem der Ansprüche 1 bis 4, dadurch gekennzeichnet, daß das innere Ende der Feder (6) auf der Dichtungsbüchse (5) abgestützt ist.

6. Kugelhahn nach einem der Ansprüche 1 bis 5, dadurch gekennzeichnet, daß zwischen der Innenwand der Spindelbohrung (3) und der zylindrischen Außenfläche des Ansatzes (7) ein nur enger Ringspalt ausgebildet ist.

7. Kugelhahn nach Anspruch 6, dadurch gekennzeichnet, daß im Ringspalt nahe dem äußeren Ende der Spindelbohrung (3) eine die Drehung und Axialbewegung des Ansatztes (7) relativ zur Spindelbohrung (3) zulassende Gleitdichtung, insbesondere eine O-Ring-Dichtung (11), angeordnet ist.
